# FASCICULE DE BREVET EUROPEEN

(11) **EP 1 016 632 B1**
(45) Date de publication et mention de la délivrance du brevet: **06.04.2005**
(21) Numéro de dépôt: 99402806.6
(22) Date de dépôt: 10.11.1999
(51) Int. Cl.: C02F 1/66, B01D 19/00

(54) **Procédé et dispositif de traitement des soudes usées de désulfuration**
Verfahren und Vorrichtung zur Behandlung von alkalischen Abwässern aus Entschwefelungsanlagen
Process and apparatus for treating alkaline waste streams from desulphurisation plants

(30) Priorité: 29.12.1998 FR 9816536
(43) Date de publication de la demande: 05.07.2000
(73) Titulaire: L'AIR LIQUIDE, S.A. à Directoire et Conseil de Surveillance pour l'Etude et l'Exploitation des Procédés Georges Claude, 75321 Paris Cedex 07 (FR)
(72) Inventeur: De Rigaud, Jean-Mathieu, 75017 Paris (FR)
(74) Mandataire: Vesin, Jacques

(56) Documents cités:
- DE-A- 2 610 638
- DE-C- 4 318 549
- FR-A- 2 560 405

## Description

La présente invention a pour objet un procédé et un dispositif de traitement, en raffinage, des soudes usées de désulfuration. Ledit procédé de traitement comprend la neutralisation et le stripage desdites soudes usées, suivis d'un traitement d'épuration de celles-ci. Selon l'invention, ladite neutralisation est mise en oeuvre de façon originale.

L'homme du métier n'ignore pas que les soudes usées de raffinerie - eaux de procédé, plus ou moins concentrées en soude, ayant notamment servi à la désulfuration des hydrocarbures -, dans la mesure où elles renferment des contaminants du type gaz dissous, solides en suspension ou en solution, hydrocarbures et où elles présentent un pH alcalin, d'environ 9,5, doivent impérativement être traitées avant rejet. Les traitements mis en oeuvre à ce jour comportent notamment une première étape de neutralisation et de stripage (à la vapeur d'eau) desdites soudes usées, suivie d'un traitement d'épuration de celles-ci, traitement d'épuration généralement du type traitement biologique ou traitement physico-chimique.

Ladite première étape de neutralisation et stripage vise notamment à préparer l'effluent audit traitement d'épuration. On conçoit que toute l'efficacité d'un traitement biologique puisse être annihilée si ledit traitement est mis en oeuvre sur un effluent renfermant trop d'hydrogène sulfuré (H₂S); ledit H₂S étant responsable de la mort de toute la biomasse.

Ladite première étape est en fait principalement mise en oeuvre pour l'élimination dudit H₂S, de l'ammoniac (NH₃), des phénols et des hydrocarbures. Lesdits H₂S et NH₃ proviennent principalement de l'hydrolyse du sel NH₄HS présent dans les eaux de procédé.

Lesdits H₂S et NH₃ sont volatils et exercent une pression partielle dans la phase vapeur de l'effluent. Par injection de vapeur d'eau, dans la colonne de stripage, on provoque une diminution de la pression partielle et on favorise donc leur extraction. Le phénomène d'extraction est amplifié par une augmentation de la température de l'effluent traité. En tête de la colonne de stripage, on a généralement une température supérieure à 105°C.

Comme H₂S est moins soluble dans l'eau que NH₃, le stripage favorise nettement l'entraînement de H₂S par rapport à celui de NH₃. Le rapport NH₃/H₂S allant ainsi croissant, le pH de l'effluent traité augmente également. Ledit effluent devient de plus en plus alcalin.

Pour favoriser davantage l'extraction de H₂S, ainsi que pour repousser les ions acides fixés dans la solution, neutraliser les soudes usées, les empêcher de devenir trop alcalines, on injecte, selon l'art antérieur, dans l'effluent traité, un acide fort : de l'acide sulfurique (H₂SO₄). On note incidemment ici que ladite injection d'acide ou neutralisation ne favorise nullement l'entraînement de NH₃. Ledit acide sulfurique est injecté en amont du stripage, en amont de la colonne de stripage, dans un mélangeur statique, en un matériau hautement résistant à la corrosion. Ledit acide sulfurique est injecté en une quantité suffisante pour amener le pH de l'effluent traité à une valeur de consigne, qui est généralement de 8.5.

En tête de la colonne de stripage, on récupère un gaz constitué de vapeur d'eau (H₂O), d'hydrogène sulfuré (H₂S), d'ammoniac (NH₃) et d'hydrocarbures. Par condensation dans un ballon dit ballon de tête de colonne, on réalise la séparation de l'H₂S et du NH₃, d'avec l'H₂O et les hydrocarbures. L'H₂S récupéré est incinéré ou brûlé à la torche. L'eau condensée en tête de colonne est renvoyée dans ladite colonne comme reflux. Les hydrocarbures condensés dans ledit ballon de tête de colonne, descendent et forment une pellicule au-dessus du niveau de l'eau. Tant que la quantité desdits hydrocarbures n'est pas trop importante, ce phénomène n'est pas gênant ; au contraire, on constate une absorption supplémentaire des phénols par lesdits hydrocarbures. Par contre, lorsque la quantité desdits hydrocarbures augmente, il convient de vidanger le ballon de tête pour éviter que lesdits hydrocarbures ne soient ré-injectés dans la colonne.

Ainsi, selon l'art antérieur, neutralise-t-on les soudes usées de raffineries avec de l'acide sulfurique (H₂SO₄) et ce, généralement, en amont du stripage. L'intervention dudit acide sulfurique (H₂SO₄), en aval du stripage, n'est pas exclue. Toutefois, elle n'est guère préconisée dans la mesure où l'on charge ainsi à nouveau, indirectement, l'effluent strippé en H₂S.

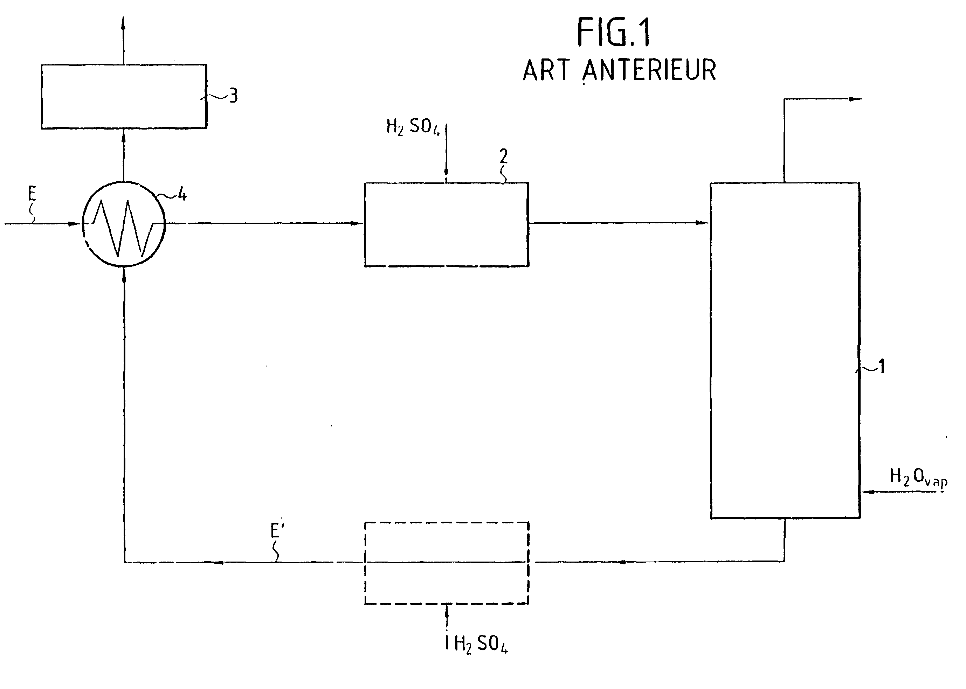

Le procédé de l'art antérieur, tel que rappelé, dans son principe, ci-dessus, est schématisé sur la figure 1 annexée.

L'intervention, dans le cadre dudit procédé, de l'acide sulfurique, donne certes satisfaction (ladite intervention est effective sur les sites de nombreuses raffineries), mais on peut toutefois relever les inconvénients et/ou problèmes listés ci-après, inhérents à ladite intervention :
- H₂SO₄ est corrosif ;
- H₂SO₄ introduit dans l'effluent des sulfates et se trouve donc responsable d'une pollution saline secondaire ainsi que d'une génération secondaire d'H₂S ;
- H₂SO₄ n'est guère souple d'utilisation (la machinerie, indispensable à son intervention (tuyauteries en inox, pompe doseuse, bac de rétention, mélangeur statique...) est sophistiquée ; des dépotages délicats sont à mettre en oeuvre...) ;
- H₂SO₄ ne permet pas une régulation précise du pH.

Dans le cadre de la présente invention, la Demanderesse propose une alternative avantageuse à ladite intervention d'H₂SO₄ dans la neutralisation des soudes usées de raffineries. Elle propose en fait l'intervention d'anhydride carbonique, comme nouvel agent de neutralisation (au lieu de l'acide sulfurique).

Selon son premier objet, l'invention concerne donc un procédé de traitement, en raffinage, des soudes usées de désulfuration. De façon classique, ledit procédé comprend la neutralisation et le stripage (à la vapeur d'eau) desdites soudes usées, suivis d'un traitement d'épuration de celles-ci. Lesdites soudes usées traitées sont plus ou moins concentrées en soude. Ladite neutralisation est mise en oeuvre avec de l'anhydride carbonique (CO₂). Les documents DE-A-2610638 et DE-C-4318549 décrivent des procédé de traitement des eaux de désulfuration dans lequels ces eaux sont strippées en présence de CO₂. Selon l'invention ladite neutralisation à l'anhydride carbonique (CO₂) est mise en oeuvre en aval dudit stripage, en un unique site d'injection.

Le CO₂ intervenant selon l'invention, à titre d'acide de neutralisation, peut intervenir aussi bien à l'état gazeux qu'à l'état liquide. L'homme du métier maîtrise parfaitement les techniques d'injection de l'acide carbonique, gazeux ou liquide. Il n'est nullement exclu de faire intervenir, selon l'invention, ledit CO₂ à l'état gazeux et liquide.

En référence au pH de l'effluent traité - soudes usées de raffineries , plus ou moins concentrées -, on peut indiquer ici que l'on vise généralement, avec le CO₂ selon l'invention, à obtenir le même résultat qu'avec l'H₂SO₄ selon l'art antérieur, à savoir, à conférer audit effluent traité, orienté vers le traitement d'épuration (effluent strippé), un pH compris entre 6,5 et 8,5; que ledit CO₂ intervienne en aval du stripage. On peut notamment viser à obtenir un pH de consigne de 8,5, comme selon l'art antérieur.

L'homme du métier a déjà compris que, dans le cadre de cette variante avantageuse, ledit CO₂ est pleinement valorisé. Tout le CO₂ injecté reste dans l'effluent. Lorsque ledit CO₂ est injecté en amont du stripage, on conçoit qu'une partie de celui-ci n'est pas valorisée, puisqu'elle va inéluctablement être éliminée audit stripage.

Quelle que soit la variante de mise en oeuvre du procédé de l'invention - injection de CO₂ liquide (CO_{2_{L}}) et/ou de CO₂ gazeux (CO_{2_{G}}),en aval du stripage, on récupère avantageusement les calories de l'effluent strippé pour chauffer l'effluent à stripper. Ainsi met-on avantageusement en oeuvre, au niveau d'au moins un échangeur de chaleur, un échange de calories entre les soudes usées strippées, orientées vers le traitement d'épuration et les soudes usées à stripper.

Dans le cadre de cet échange de calories, au niveau de cet échangeur, les soudes usées strippées sont quelque peu brassées, mélangées. On peut avantageusement tirer profit de ce brassage pour répartir uniformément au sein desdites soudes usées strippées le CO₂ injecté. On comprend donc que selon le procédé de l'invention, la neutralisation à l'anhydride carbonique est mise en oeuvre en aval du stripage, en amont de la mise en oeuvre d'un tel échange de chaleur.

De manière générale, on a déjà compris que le CO₂ injecté se mélange beaucoup plus aisément à l'effluent que le H₂SO₄ et que la mise en oeuvre du procédé de l'invention permet donc notamment de faire l'économie d'un mélangeur statique, mélangeur en un matériau obligatoirement hautement résistant à la corrosion, dans le contexte de l'intervention de H₂SO₄.

En fait, l'intervention de CO₂ se révèle beaucoup plus avantageuse que celle de H₂SO₄, en référence à de nombreux points de vue :
- CO₂ est beaucoup moins corrosif que H₂SO₄,
- CO₂ n'introduit ni pollution saline secondaire, ni H₂S ;
- CO₂ est beaucoup plus souple d'utilisation (la machinerie, indispensable à son utilisation (tuyauterie en cuivre, pas de pompe doseuse, pas de mélangeur statique...) est simple ; les dépotages sont plus réduits et moins dangereux...) ;
- CO₂ permet une régulation précise du pH ; la courbe de neutralisation étant à pente douce.

De surcroît, des résultats très intéressants ont été obtenus. Avec une injection de CO₂, en aval du stripage, la Demanderesse a observé une meilleure élimination de l'ammoniac (NH₃), des phénols et des chlurures, (voir les exemples ci-après)

Selon son deuxième objet, la présente invention concerne un dispositif de traitement, en raffinage, des soudes usées de désulfuration ; ledit dispositif convenant à la mise en oeuvre du procédé décrit ci-dessus (premier objet de la présente invention).

De façon classique, ledit dispositif comprend les caratéristiques de la revendication 6.

De façon caractéristique, lesdits moyens de neutralisation desdites soudes usées comprennent un unique dispositif d'injection d'anhydride carbonique (CO₂) dans lesdites soudes usées.

Le dispositif de l'invention est du type du dispositif connu de l'art antérieur en ce qu'il incorpore l'unité de stripage, qui elle-même comprend généralement une colonne de stripage et ses annexes, convenant pour la mise en oeuvre d'un stripage à la vapeur d'eau et l'unité de traitement d'épuration des soudes usées neutralisées et strippées, qui consiste généralement en une unité de traitement biologique ou en une unité de traitement physico-chimique et en ce qu'il associe à ladite unité de stripage, en amont de l'unité de traitement d'épuration, des moyens de neutralisation de l'effluent traité. Lesdits moyens de neutralisation sont originaux en ce qu'il ne s'agit pas de moyens convenant à l'injection de H₂SO₄ mais de moyens convenant à l'injection de CO₂. De tels moyens sont *per se* connus de l'homme de métier. Il peut s'agir de moyens convenant à l'injection de CO₂ gazeux (CO_{2_{G}}) et/ou de moyens convenant à l'injection de CO₂ liquide (CO_{2_{L}}).

Lesdits moyens sont disposés en aval de ladite unité de stripage. Ils interviennent avantageusement directement sur la canalisation qui conduit les soudes usées strippées à l'unité de traitement d'épuration.

Sur ladite canalisation, on trouve également avantageusement au moins un échangeur de chaleur qui permet la récupération de calories sur les soudes usées strippées, orientées vers le traitement d'épuration. Ledit échangeur de chaleur complète avantageusement le dispositif de l'invention. Les calories récupérées sont utilisées pour chauffer les soudes usées à stripper. Dans le contexte de l'intervention d'un tel échangeur de chaleur (en fait d'un dispositif de récupération de calories comprenant au moins un échangeur thermique), au vu de ce qui a été exposé en référence au procédé de l'invention, on note que les moyens de neutralisation (dispositif d'injection de CO₂) sont avantageusement disposés en amont dudit échangeur de chaleur, en aval de l'unité de stripage.

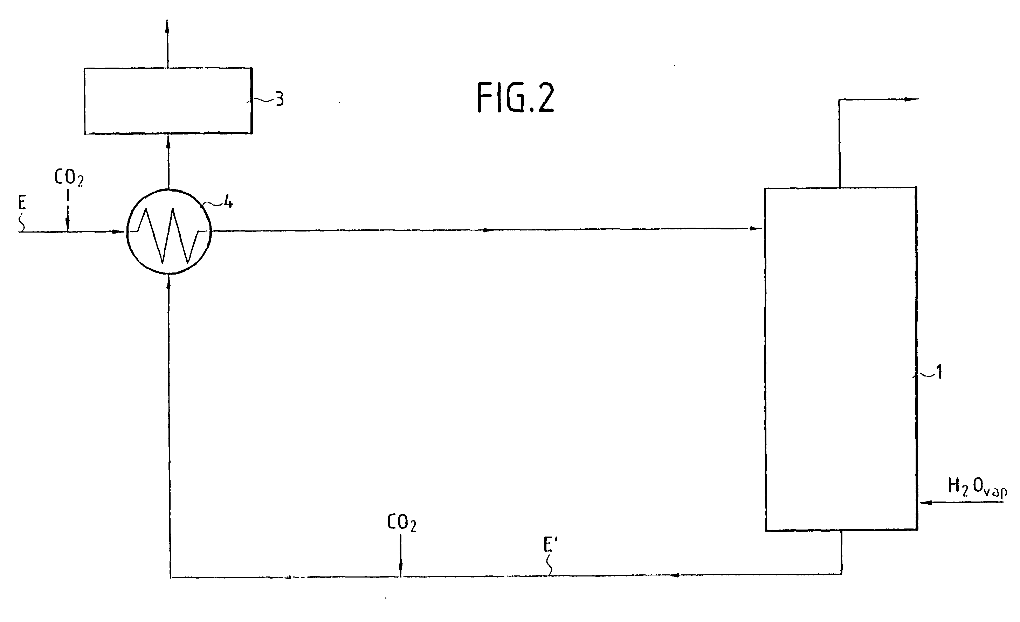

On se propose maintenant de décrire l'invention en référence aux figures 1 et 2 annexées. Ces figures sont des schémas de principe de procédé.

La figure 1 illustre en fait la technologie de l'art antérieur, telle que mise en oeuvre sur de nombreux sites de raffinage.

La figure 2 illustre la technologie selon l'invention.

Selon l'art antérieur (figure 1), les soudes usées à traiter - effluent E - sont neutralisées en amont du stripage, mis en oeuvre dans une colonne de stripage 1. Ladite neutralisation est réalisée par injection de H₂SO₄ au niveau d'un mélangeur statique 2. Ledit mélangeur 2 est en un matériau présentant une haute résistance à la corrosion. L'effluent strippé E' est orienté vers un dispositif 3 convenant à la mise en oeuvre d'un traitement d'épuration. Ledit dispositif 3 consiste généralement en une unité de traitement biologique. Au niveau de l'échangeur de chaleur 4, des calories sont prélevées sur l'effluent strippé E' et cédées à l'effluent à stripper E.

On a indiqué, en pointillé, que l'injection de H₂SO₄ peut, selon une autre variante moins avantageuse, être mise en oeuvre en aval du stripage.

De la même façon, selon l'invention (figure 2), les soudes usées à traiter - effluent E - sont strippées dans la colcnne de stripage 1. De façon caractéristique, elles sont neutralisées, par simple injection de CO₂. Ladite injection de CO₂ est mise en oeuvre en aval du stripage, sur l'effluent strippé E'. Elle est mise en oeuvre en amont de échangeur de chaleur 4. L'effluent strippé E' neutralisé est envoyé au dispositif 3 convenant à la mise en oeuvre du traitement d'épuration.

L'invention est maintenant illustrée par des exemples. Son intérêt ressort à la considération des exemples comparatifs, présentés en parallèle.

La Demanderesse a traité un effluent de raffinerie présentant un pH de 9,7, une température de 40°C, circulant à un débit de 3,42 kg/s dans une installation du type de celles schématisées sur les figures 1 et 2 annexées.

Ledit effluent résulte du mélange de deux types de solutions :
- des soudes usées,
- des eaux acides.

On indique, respectivement, dans chacun des tableaux ci-dessous, les caractéristiques de ces solutions.

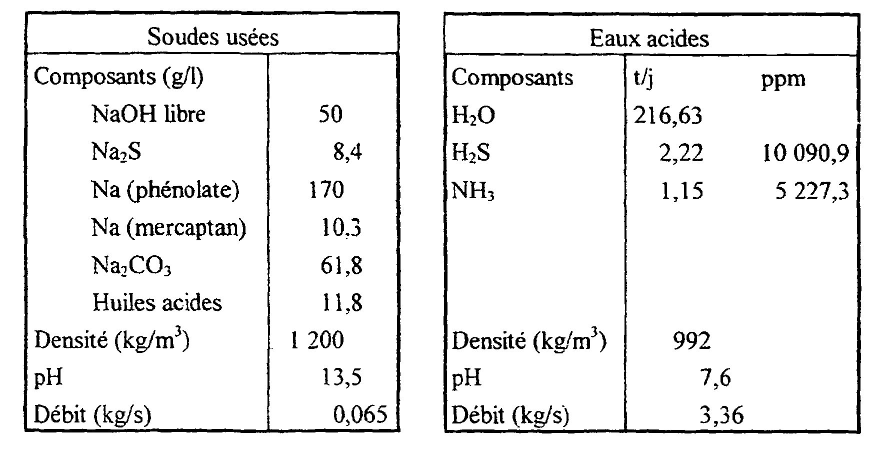

Ledit effluent (soudes usées diluées) a toujours été strippé à la vapeur d'eau dans les mêmes conditions.

Sa neutralisation a été mise en oeuvre :
- selon l'art antérieur, avec injection de H₂SO₄ ( pureté : 96 % ; densité à 10°C : 1 845 kg/m³) en amont ou en aval du stripage. Ledit H₂SO₄ est injecté, dans un mélangeur statique (en inox HASTELLOY) inséré dans l'installation, à un débit de 0,011 kg/s. Lorsque ledit H₂SO₄ est injecté en amont du stripage, il entre environ 3,43 kg/s dans la colonne de stripage ; lorsque ledit H₂SO₄ est injecté en aval dudit strippping, il entre 3,42 kg/s dans celle-ci. A titre indicatif, on peut ici préciser qu'il sort alors 2,91 kg/s de celle-ci ;
- avec injection de CO_{2_{L}'} en amont ou selon l'invention en aval du stripage.

Dans tous les cas, l'injection de H₂SO₄ ou celle de CO_{2_{L}} a été mise en oeuvre pour générer un effluent qui présente un pH de 7 ; effluent susceptible de subir efficacement un traitement biologique en aval.

On précise dans le tableau ci-après les quantités (Q) respectives de H₂SO₄ et de CO₂ qui ont dû être injectées.

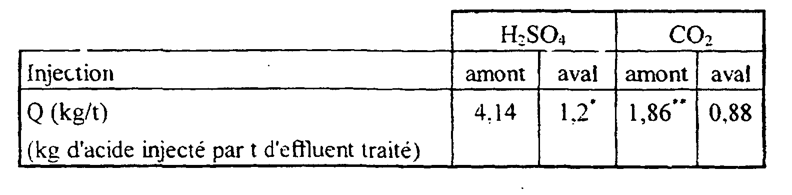

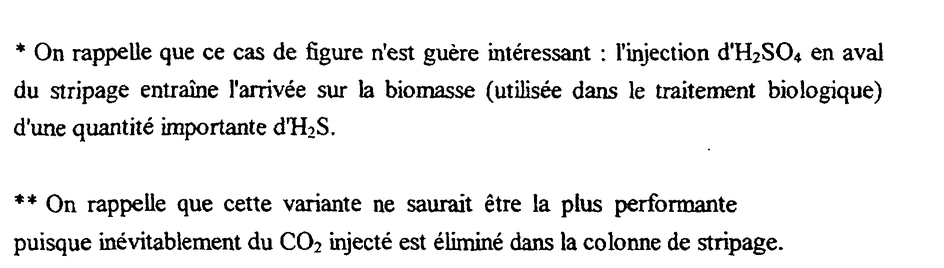

Selon l'invention : injection de CO₂ en aval du stripage - est particulièrement intéressante du point de vue économique. Elle ne consomme que 0,88 kg de CO₂ par tonne de charge (pour 4,14 kg de H₂SO₄ par tonne de charge, dans le cadre de la variante de l'art antérieur, la plus communément mise en oeuvre : injection de H₂SO₄ en amont du stripage).

Pour apprécier ses performances, on se réfère aux chiffres ci-après :

| Elimination | H₂SO₄ (injecté en amont) | CO₂ (injecté en aval) |
|---|---|---|
| de H₂S | 99 % | 94 % |
| des RSH | 97 % | 92 % |
| de NH₃ | 44 % | 73 % |
| des phénols | 99,3% | 99,7 % |

On a par ailleurs observé une meilleure élimination des chlorures et de l'azote total, lors de la mise en oeuvre du procédé de l'invention.

## Revendications

1. Procédé de traitement, en raffinage, des soudes usées de désulfuration (E), ledit procédé comprenant la neutralisation et le stripage desdites soudes usées (E), suivis d'un traitement d'épuration de celles-ci, **caractérisé en ce que** ladite neutralisation est mise en oeuvre avec de l'anhydride carbonique (CO₂) en un unique site d'injection situé en aval dudit stripage.

2. Procédé selon la revendication 1, **caractérisé en ce que** ladite neutralisation est mise en oeuvre avec de l'anhydride carbonique gazeux ou liquide.

3. Procédé selon l'une des revendications 1 ou 2, **caractérisé en ce que** ladite neutralisation à l'anhydride carbonique est mise en oeuvre pour conférer aux soudes usées strippées (E'), orientées vers le traitement d'épuration, un pH compris entre 6,5 et 8,5.

4. Procédé selon l'une quelconque des revendications 1 à 3, **caractérisé en ce qu'**il comprend en outre un échange de calories entre les soudes usées strippées (E') orientées vers le traitement d'épuration et les soudes usées à stripper (E).

5. Procédé selon les revendications 1 et 4, **caractérisé en ce que** ladite neutralisation à l'anhydride carbonique, mise en oeuvre en aval du stripage, l'est en amont dudit échange de calories.

6. Dispositif de traitement, en raffinage, des soudes usées de désulfuration (E), ledit dispositif comprenant :
- des moyens de neutralisation desdites soudes usées (E) ;
- une unité de stripage (1),
- et, une unité de traitement d'épuration (3) des soudes usées neutralisées et strippées,
**caractérisé en ce que** lesdits moyens de neutralisation comprennent un unique dispositif d'injection d'anhydride carbonique (CO₂) dans lesdites soudes usées, disposé en aval de ladite unité de stripage (1).

7. Dispositif selon la revendication 6, **caractérisé en ce que** lesdits moyens de neutralisation conviennent pour l'injection d'anhydride carbonique gazeux ou liquide.

8. Dispositif selon l'une quelconque des revendications 6 ou 7, **caractérisé en ce qu'**il comprend en outre, au moins un échangeur de chaleur (4), au sein duquel des calories sont échangées entre les soudes usées strippées (E') orientées vers l'unité de traitement d'épuration (3) et les soudes usées à stripper (E).

9. Dispositif selon les revendications 1 et 8, **caractérisé en ce que** lesdits moyens de neutralisation, disposés en aval de ladite unité de stripage (1), le sont en amont dudit échangeur de chaleur (4).

## Patentansprüche

1. Verfahren zur Behandlung von aus der Entschwefelung stammenden verbrauchten Natronlaugen (E) im Rahmen der Raffination mit Neutralisation und Strippen der verbrauchten Natronlaugen (E) und anschließender Reinigungsbehandlung, **dadurch gekennzeichnet, daß** man die Neutralisation mit Kohlendioxid (CO₂) an einem einzigen Einleitungspunkt nach dem Strippen durchführt.

2. Verfahren nach Anspruch 1, **dadurch gekennzeichnet, daß** man die Neutralisation mit gasförmigem oder flüssigem Kohlendioxid durchführt.

3. Verfahren nach Anspruch 1 oder 2, **dadurch gekennzeichnet, daß** man bei der Kohlendioxid-Neutralisation die gestrippten verbrauchten Natronlaugen (E'), die für die Reinigungsbehandlung vorgesehen sind, auf einen pH-Wert zwischen 6,5 und 8,5 einstellt.

4. Verfahren nach einem der Ansprüche 1 bis 3, **dadurch gekennzeichnet, daß** man außerdem einen Wärmeaustausch zwischen den gestrippten verbrauchten Natronlaugen (E'), die für die Reinigungsbehandlung vorgesehen sind, und den zu strippenden verbrauchten Natronlaugen (E) vornimmt.

5. Verfahren nach einem der Ansprüche 1 und 4, **dadurch gekennzeichnet, daß** man die nach dem Strippen durchgeführte Kohlendioxid-Neutralisation vor dem Wärmeaustausch durchführt.

6. Vorrichtung zur Behandlung von aus der Entschwefelung stammenden verbrauchten Natronlaugen (E) im Rahmen der Raffination mit:
- Mitteln zur Neutralisation der verbrauchten Natronlaugen (E),
- einer Strippeinheit (1)
- und einer Reinigungsbehandlungseinheit (3) für neutralisierte und gestrippte verbrauchte Natronlaugen,
**dadurch gekennzeichnet, daß** die Neutralisationsmittel eine einzige Vorrichtung zum Einleiten von Kohlendioxid (CO₂) in die verbrauchten Natronlaugen umfassen, die hinter der Strippeinheit (1) angeordnet ist.

7. Vorrichtung nach Anspruch 6, **dadurch gekennzeichnet, daß** die Neutralisationsmittel für die Einleitung von gasförmigem oder flüssigem Kohlendioxid geeignet sind.

8. Vorrichtung nach Anspruch 6 oder 7, **dadurch gekennzeichnet, daß** sie außerdem mindestens einen Wärmetauscher (4) enthält, in dem ein Wärmeaustausch zwischen den gestrippten verbrauchten Natronlaugen (E'), die für die Reinigungsbehandlung (3) vorgesehen sind, und den zu strippenden verbrauchten Natronlaugen (E) erfolgt.

9. Vorrichtung nach einem der Ansprüche 7 und 8, **dadurch gekennzeichnet, daß** die hinter der Strippeinheit (1) angeordneten Neutralisationsmittel vor dem Wärmetauscher (4) angeordnet sind.

## Claims

1. Process for the in-refinery treatment of sodium-bearing desulphurization waste (E), the said process comprising the neutralization and the stripping of the said sodium-bearing waste (E) followed by a purification treatment of the latter, **characterized in that** the said neutralization is carried out with carbon dioxide (CO₂) at a single injection site located downstream of the said stripping.

2. Process according to Claim 1, **characterized in that** the said neutralization is carried out with gaseous or liquid carbon dioxide.

3. Process according to either of Claims 1 and 2, **characterized in that** the said neutralization using carbon dioxide is carried out in order to give the stripped sodium-bearing waste (E'), sent towards the purification treatment unit, a pH of between 6.5 and 8.5.

4. Process according to any one of Claims 1 to 3, **characterized in that** it furthermore includes heat exchange between the stripped sodium-bearing waste (E') sent towards the purification treatment unit and the sodium-bearing waste to be stripped (E).

5. Process according to Claims 1 and 4, **characterized in that** the said neutralization using carbon dioxide, downstream of the stripping, is carried out upstream of the said heat exchange.

6. Plant for the in-refinery treatment of sodium-bearing desulphurization waste (E), the said plant comprising:
- means for neutralizing the said sodium-bearing waste (E);
- a stripping unit (1); and
- a purification treatment unit (3) for purifying the neutralized, stripped sodium-bearing waste,
**characterized in that** the said neutralization means comprise a single device for injecting carbon dioxide (CO₂) into the said sodium-bearing waste, the said device being placed downstream of the said stripping unit (1).

7. Plant according to Claim 6, **characterized in that** the said neutralization means are suitable for injecting gaseous or liquid carbon dioxide.

8. Plant according to either of Claims 6 and 7, **characterized in that** it furthermore includes at least one heat exchanger (4) in which heat is exchanged between the stripped sodium-bearing waste (E') sent towards the purification treatment unit (3) and the sodium-bearing waste to be stripped (E).

9. Plant according to Claims 7 and 8, **characterized in that** the said neutralization means, placed downstream of the said stripping unit (1), are upstream of the said heat exchanger (4).
